# EUROPEAN PATENT SPECIFICATION

(11) **EP 2 674 386 B1**
(45) Date of publication and mention of the grant of the patent: **21.01.2015**
(21) Application number: 12171471.1
(22) Date of filing: 11.06.2012
(51) Int. Cl.: B60G 17/056, B66F 9/075, B66F 9/22, B66F 9/08

(54) **A forklift truck with load-dependent drive wheel pressure**
Gabelstapler mit lastabhängigem Antriebsraddruck
Chariot élévateur avec pression de roue motrice dépendant de la charge

(43) Date of publication of application: 18.12.2013
(73) Proprietor: BT Products AB, 595 81 Mjölby (SE)
(72) Inventor: Söderlund, Martin, 72591 Västerås (SE)
(74) Representative: Zacco Sweden AB

(56) References cited:
- EP-A1- 2 159 186

## Description

### Technical Field

The present invention to a forklift truck according to the preamble of claim 1.

### Background Art

Forklift trucks may be provided with load-dependent drive wheel pressure. Such trucks typically comprises a hydraulic actuator that is arranged to act on the suspension of the drive wheel so that the pressure of the drive wheel against the floor or driving surface is automatically increased when the load carried by the forklift truck increases. The increased drive wheel pressure results in greater friction between the drive wheel and the floor, and therewith enables a shorter braking distance in comparison with braking distances when the drive wheel pressure is not load-dependent.

EP0209502 B1 discloses a forklift truck with load-dependent drive wheel pressure.

A double stacker truck is a truck type that has double lifting function, i.e. may lift two separate loads. A double stacker truck typically comprises one set of forks for lifting a first load and elevating support legs that are arranged to lift a second load. A further type of double stacker trucks has two sets of forks that are movable independently of each other on two masts, e.g. as shown in EP2159186 A1.

Double stacker trucks with load dependent drive wheel pressure typically comprises a hydraulic system that directs the highest hydraulic pressure of the hydraulic cylinders that raises and lowers the forks or the elevating support legs to the hydraulic actuator of the drive wheel. A problem in these types of hydraulic systems is that hydraulic fluid may short circuit in the system and cause the forks to perform unwanted movements when the support legs are actuated, or vice versa. To avoid such unwanted movement the known hydraulic systems for controlling drive wheel pressure in double stacker trucks comprises several valves that can be independently opened or closed during movement of the forks or support legs. The known systems further comprise a separate fluid line including several valves for draining the drive wheel cylinder. This makes these types of double stacker trucks complicated and costly to manufacture.

Hence, an object of the invention is to provide a simple and cost effective forklift truck having two sets of forks, or upper forks and elevating support arms, and being provided with load-dependent drive wheel pressure.

### Summary of invention

According to the invention this object is achieved by a forklift truck 10 comprising a truck body 20, a drive wheel 30, first forks 40, second forks 50, or support arms 50, and a hydraulic system 100, 101 which comprises:
- a first hydraulic line D2 for delivering hydraulic fluid to an hydraulic actuator 41 of the first forks 40,
- a second hydraulic line D3 for delivering hydraulic fluid to an hydraulic actuator 51 of the second forks 50 or to the support arms 50,
- a third hydraulic line D6 for delivering hydraulic fluid to an hydraulic actuator 31 of the drive wheel 30, and
- a valve device 110 to which the first, second and third hydraulic lines D2, D3, D6 are connected, the valve device 110 being adapted to supply the highest one of the hydraulic fluid pressures PU, PL of the first and the second hydraulic lines D2, D3 to the third hydraulic line D6, thereby assuring a load-dependent drive wheel pressure during operation of the forklift truck,
   characterized in that the forklift truck hydraulic system comprises
- at least one flow restriction 130, 120 arranged to restrict hydraulic fluid flow between the hydraulic actuator of the first forks 40 or between the hydraulic actuator of the second forks 50, or of the support arms 50, and the valve device 110.

The flow restriction prevents unwanted movement, so called "ghost movement", of the forks when the support legs are unloaded or vice versa. The restriction prevents a sudden decrease of the pressure in the valve device if the pressure rapidly decreases in hydraulic line D2 or D3 due to unloading of the forks or the support legs. If for example the support legs are unloaded this has the effect that the valve device will be held for sufficient time in a position where fluid from the third hydraulic actuator will be drained through the hydraulic line leading to second hydraulic actuator of the support legs. No hydraulic fluid can flow from the drive wheel actuator in the direction of the first hydraulic actuator of the forks. The above effect is achieved by merely providing one or two flow restrictions between the hydraulic actuator of the first forks or between the hydraulic actuator of the second forks, or of the support arms and the valve device. This allows the hydraulic system of the truck to be manufactured at low cost and easy to install. No separate line is needed to drain the hydraulic actuator for the drive wheel since it is through either of the hydraulic lines leading to the actuators for the forks or the support legs

According to an alternative, the valve device 110 is a pressure-actuated valve device 110.

Preferably, the pressure-actuated valve device 110 is adapted to always supply the highest one of the hydraulic fluid pressures PU, PL of the first and the second hydraulic lines D2, D3 to the third hydraulic line D6.

The port of the pressure-actuated valve device 110 that is connected to the hydraulic actuator of the drive wheel 30 may be directly connected to the hydraulic actuator of the drive wheel 30.

According to an alternative, the pressure-actuated valve device 110 is a shuttle valve 110.

Preferably, a first end port 112 of the shuttle valve 110 is connected to the first hydraulic line D2, a second end port 111 of the shuttle valve 110 is connected to the second hydraulic line D3 and a middle port 113 of the shuttle valve 110 is connected to the hydraulic actuator of the drive wheel 30.

Preferably, the hydraulic actuator 31 of the drive wheel 30 is connected to a hydraulic fluid tank 140 of the forklift truck via the first hydraulic line D2 and via the second hydraulic line D3.

According to an alternative, the flow restriction 130, 120 is a separate device which is not part of the valve device 110.

The flow restriction 130, 120 may be a throttle valve 130, 120.

According to an alternative, the flow restriction 130, 120 is a part of the valve device 110.

According to an alternative, the flow restriction 120 is arranged in the hydraulic line D4 between the first end port 112 of the valve device 110 and the second hydraulic actuator 51.

According to an alternative the flow restriction 130 is arranged in the hydraulic line D5 between the second end port 111 of the valve device 110 and the first hydraulic actuator 41.

According to a preferred embodiment, the forklift truck 10 is a stacker forklift truck comprising upper forks 40 and elevating support arms 50, wherein - a first flow restriction 120 is arranged to restrict the hydraulic fluid flow between the hydraulic actuator 51 of the elevating support legs 50 and the valve device 110 and,
a second flow restriction 130 is arranged to restrict the hydraulic fluid flow between the hydraulic actuator 41 of the upper forks 40 and the valve device 110.

Preferably, said forklift truck is a double stacker truck comprising upper forks 40 and elevating support arms 50 that are arranged to lift loads.

According to a second embodiment, the fork lift truck 10 is a double stacker truck comprising first forks 40 and second forks 50, wherein the hydraulic system 101 of the double stacker truck 10 comprises:
- a first flow restriction 120 arranged to restrict the hydraulic fluid flow between the hydraulic actuator 41 of the first forks 40 and the valve device 110 and,
- a second flow restriction 130 arranged to restrict the hydraulic fluid flow between the hydraulic actuator 51 of the lower forks 50 and the valve device 110.

### Brief Description of Drawings

- Figure 1:: A schematic drawing of a forklift truck according to a first preferred embodiment of the invention and a portion of the inventive hydraulic system.
- Figure 2:: A schematic drawing of the hydraulic system of the forklift truck according to the first preferred embodiment of the invention.
- Figure 3:: A detail of the hydraulic system according to an alternative of the first embodiment of the invention.
- Figure 4:: A detail of the hydraulic system according to an alternative of the first embodiment of the invention.
- Figure 5:: A schematic drawing of a fork lift truck according to a second embodiment of the invention.
- Figure 6:: A schematic drawing of the hydraulic system of the forklift truck according to the second embodiment of the invention.

### Description of embodiments

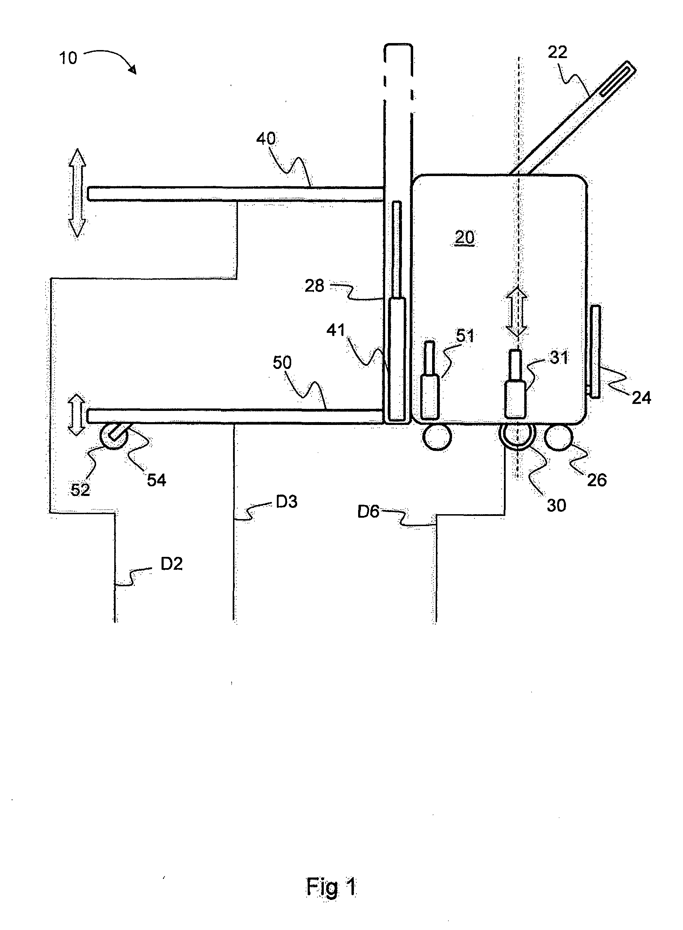

Figure 1 shows schematically a forklift truck 10 according to a first preferred embodiment of the invention. The forklift truck is a double stacker tiller arm truck which can be steered by a driver which either walks behind the truck or rides on a pivotal platform 24 that is arranged on the rear of the truck. A tiller arm 22 is provided for steering the truck. The truck comprises a truck body 20, i.e. the chassis, which comprises the electrical motor of the truck, control system, electrical circuits and the hydraulic system of the truck. These parts are not shown in figure 1. The truck 10 comprises a mast 28 on which a first, upper, set of forks 40 can move upwards and downwards in the vertical direction. The movement of the forks 40 is achieved by a first hydraulic actuator, such as a hydraulic piston/cylinder arrangement 41 that is connected to the hydraulic system of the truck by a hydraulic fluid line D2.

The forward portion of the truck further comprises two elevating support legs 50. In figure 1 only one support leg and one fork are shown since the truck is depicted in profile. The support legs are arranged such that a load, i.e. a pallet, may be placed on the support legs. Support wheels 52 are arranged in the forward end of the support legs 50 by a pivotal wheel attachment 54. The support legs 50 are elevating, i.e. arranged such that they can be raised a predetermined distance in the vertical direction and lowered and thereby lift a load that is placed on the support legs. To achieve this, the truck comprises a second hydraulic actuator, such as hydraulic piston/cylinder 51 that is connected to the hydraulic system of the truck by a hydraulic fluid line D3. When hydraulic fluid is supplied to the hydraulic actuator 51, the actuator lifts the support legs in the vertical direction, away from the floor.

It is possible that the first hydraulic cylinder arrangement 41 comprises two hydraulic cylinders and that the second hydraulic cylinder arrangement comprises one hydraulic cylinder and the first hydraulic cylinder arrangement and the second hydraulic cylinder arrangement are coupled by a chain and pulley arrangement. The advantage herewith is the two hydraulic cylinders of the first arrangement could be relatively short and still be able to lift the forks on the entire length of the mast.

The truck could also be a type of truck which has upper forks and elevating support legs, but where the support legs primarily are not intended for lifting loads. The provision of elevating support legs is also useful for increasing the ground clearance between the floor and the support legs so that the truck can run over obstacles such as debris or doorsteps. In the double stacker fork lift truck shown in figure 1, the mast 28 of the truck is supported on the support legs 50 and is therefore lifted by the support legs when these are raised.

However, the truck may also be a double stacker truck in which the mast is fixed on the chassis of the truck and the support legs are arranged to be raised and lowered independently of the mast.

The truck 10 comprises a drive wheel 30 that is arranged at the rear of the truck under the truck housing and driven by the electrical motor of the truck. Under the truck housing are further non-driven support wheels 26 arranged.

A third hydraulic actuator, e.g. a hydraulic piston/cylinder arrangement 31 is arranged to increase the pressure of the drive wheel 30 against the ground in dependency of the load that the truck is carrying. As is known in the art, this is achieved in that the third hydraulic actuator compresses on one or more of the springs in the drive wheel suspension and thereby increases the spring force that presses the drive wheel towards the ground (not shown in figure 1).

The third hydraulic actuator 31 is connected to the hydraulic system of the truck by a hydraulic fluid line D6.

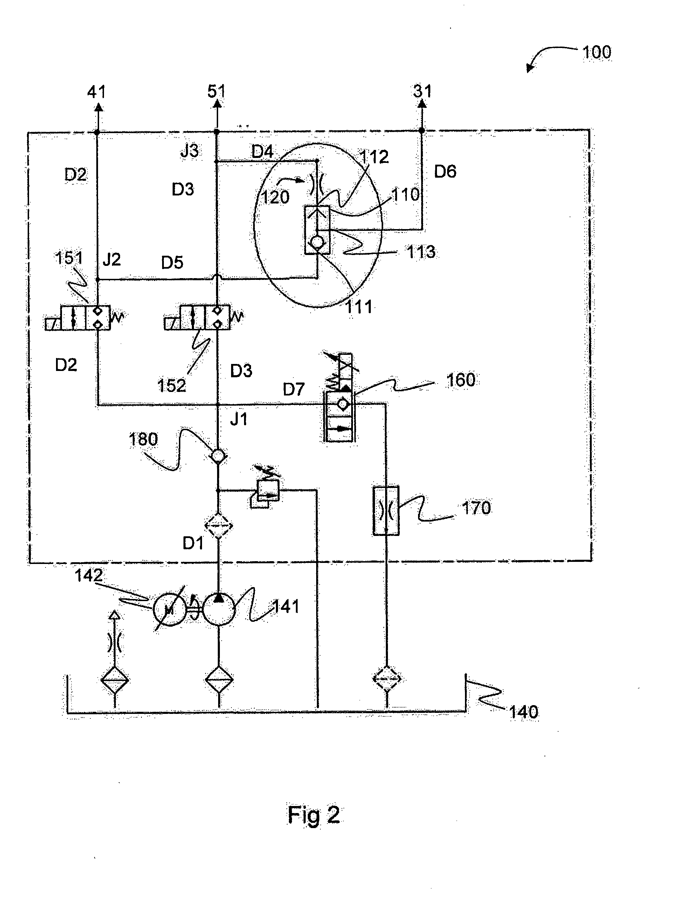

Figure 2 is a schematically drawing of the hydraulic system 100 of the forklift truck 10. In principle, the hydraulic system is arranged to actuate the first hydraulic actuator 41 for lifting or lowering the upper forks 40 on the mast 28 and to actuate the second hydraulic actuator 51 to raise or lower the elevating support legs 50 and also to actuate the third hydraulic actuator 31 to increase or decrease the pressure between the drive wheel 30 and the ground in dependency of the highest pressure that results from the load that acts on the forks 40 or the support legs 50 of the truck.

The hydraulic system 100 comprises a tank 140 which holds hydraulic fluid, typically oil. A pump 141 that is driven by an electric motor 142 supplies hydraulic fluid to the system. From the pump 141 a hydraulic fluid line D1 leads to a junction J1 from which a line D2 leads over a first two-way on/off valve 151 to the first hydraulic actuator 41 of the upper forks 40 of the forklift truck. A further hydraulic fluid line D3 leads from junction J1 over a second two way on-off valve 152 to the second hydraulic actuator 51 of the support legs 50 of the forklift truck.

The two-way on/off valves 151, 152 are arranged such that they can assume an open position in which fluid can flow from the pump 141 through the valves 151, 152 to the hydraulic actuators 41, 51 to raise the forks or the support legs. When the forks or support legs have been raised sufficiently, the valves are moved to a closed position in which fluid cannot pass through the valve. Valves 151, 152 may be operated separately. A hydraulic line D7 through which fluid is drained from the hydraulic system leads from junction J1 back towards the tank over a proportional valve 160 and a flow control valve 170 which determines the maximum velocity during lowering of the forks or support legs. Between the pump 141 and the junction J1 a non-return valve 180 is arranged to prevent hydraulic fluid from flowing back into the pump 141 during lowering of the forks or support legs. To lower the forks and support legs, the pump is stopped and the valve 151 or valve 52 and valve 160 are opened whereby fluid flows back to the tank through line D7.

The hydraulic system 100 comprises a valve device 110 that connects the first hydraulic actuator 41 for the forks and the second hydraulic actuator 51 for the support legs to the hydraulic actuator 31 of the drive wheel 111 so that the highest hydraulic pressure that acts on either the first or the second actuator is supplied to the hydraulic actuator 31 of the drive wheel 30.

The valve device is a pressure-actuated valve device, preferably a pressure actuated shuttle valve. However the valve device could also be 3-2 valve that is controlled by pressure sensors. The valve device could also be two separate two-way on/off valves that are controlled independently by pressure sensors.

In figure 2 the valve device is a pressure actuated shuttle valve. The shuttle valve has two opposing end ports 111, 112 interconnected by a channel comprising a movable valve body, such as a ball or a cylinder. A middle port 113 is arranged between the opposing end ports 111, 112. Line D2 which leads to the first actuator for the forks is connected to the first end port 111 of the shuttle valve 110 by a line D5, which extends from a position between the on/off valve 151 and the first actuator 41. Line D3 which leads to the second hydraulic actuator 51 for the support legs is connected to the second end port 112 of the shuttle valve 110 by a line D4, which extends from a position between the on/off valve 152 and the second hydraulic actuator 51. A line D6 leads from a middle port 113 of the shuttle valve 110 to the third hydraulic actuator 31 for the drive wheel 30.

As is evident from figure 2, the third hydraulic actuator 31 is connected to the tank only via line D7, either of lines D4 and D3 or lines D5 or D2, the shuttle valve 110 and line D6. Hence there is no separate direct line from the third hydraulic actuator 31 to the tank. The cost of the hydraulic system is thereby reduced since few components are used in the system. The system is further easy and fast to assemble. Another advantage of the hydraulic system is that it compact and thereby saves space in the truck housing

In operation, the valve body is forced by the hydraulic pressure from the end port with highest hydraulic pressure to the end port with the lowest hydraulic pressure so that the valve ball closes the end port with the lowest hydraulic pressure. This will ensure that a hydraulic connection always is established between the drive wheel actuator and the one of the first hydraulic actuator for the forks and the second hydraulic actuator for the support legs that has the highest hydraulic pressure. For example, if the pressure in line D4 (leading to the second hydraulic actuator for the support leg actuator) is higher than the pressure in line D5 (leading to the first hydraulic actuator for the forks) the valve body will be forced to end port 111. The valve body then closes end port 111 and the hydraulic fluid pressure from line D4 will be supplied to the third hydraulic actuator for the drive wheel through line D6.

According to the first embodiment of the invention a flow restriction 120 is arranged in line D4 in a position between the end port 112 of the valve 110 and the second hydraulic actuator 51. In figure 2, the restriction is provided between end port 112 and the junction J3 from which line D4 branches of from line D3.

In the present embodiment, the cylinder area of the first and the second hydraulic actuators are equal and therefore the hydraulic pressure (PU) in line D4 is higher than the hydraulic pressure (PL) in line D5. In the truck, the mast is arranged on the support legs and therefore the hydraulic actuator for the support legs lifts a heavier load than the first actuator, i .e. the weight of the support legs plus the weight of the mast and the load on the forks. Unwanted "ghost movements" of the forks can therefore only occur during lowering of the support legs. Therefore it is sufficient to arrange one flow restriction between the end port 112 of the valve 110 and the second hydraulic actuator 51.

The flow restriction 120 may be a hydraulic line section with narrower cross-section than the rest of the line. The flow restriction may also be a throttle valve. The flow restriction may also be integrated in the shuttle valve 110. This makes the hydraulic system easy to manufacture.

The flow restriction 120 prevents unwanted movement of the upper forks 40 when the support legs 50 are unloaded, so called "ghost movement" of the upper forks. This is achieved in that the restriction 120 prevents a sudden decrease of the pressure at port 112 when the pressure rapidly decreases in duct D4 due to the unloading of the support legs 51. This has the effect that pressures at the end port 112 and the middle port 113 will be equal and end port 112 thereby remains open so that fluid can flow from the hydraulic actuator 31 out through end port 112. Therefore no unwanted flow of hydraulic fluid will occur from the middle port 113 and through the end port 111. End port 111 remains closed until so much fluid has been drained from the hydraulic actuator 31 that the pressure on the middle port 113 and the end port 112 has decreased below the pressure on end port 111. Then the valve body changes position and closes end port 112. Thereafter the hydraulic actuator for the forks 41 is in communication with the hydraulic actuator for the drive wheel.

In the following the function of the restriction 120 is explained in relation to an example in which the forklift truck has lifted a load on the upper forks 40 and the support legs are raised.

As described above, in the present embodiment, the cylinder area of the upper and lower hydraulic actuators are equal and therefore the hydraulic pressure (PU) in line D4 is higher than the hydraulic pressure (PL) in line D5. This is the case since the second actuator lifts a heavier load than the first actuator, i .e. the weight of the support legs plus the weight of the mast and the load on the forks. Therefore the pressure in line D4 is higher than the pressure in line D5, for example, the pressure is 200 bar in line D4 and 100 bar in line D5. This pressure distribution forces the shuttle valve to the position shown in figure 2 in which the valve ball closes end port 111 that is connected to the first hydraulic actuator 41 for the forks. End port 112 that is connected to the second hydraulic actuator 51 for the support legs is open. Thereby is the pressure that is acting on the second hydraulic actuator, e.g. 200 bar, provided in the line D6 that leads to the third hydraulic actuator 31 for the drive wheel.

When the support legs are lowered from the raised position, the pressure in line D4 rapidly drops to zero bar as the hydraulic fluid is drained from the second hydraulic actuator for the support legs. If no restriction was present in line D4 the pressure would also drop rapidly on end port 112 and cause the valve ball to shift position and close end port 112. Thereby would the first hydraulic actuator for the forks 41 and the third hydraulic actuator for the drive wheel 31 be in hydraulic communication. However, in the third hydraulic actuator for the drive wheel the pressure would still be 200 bar. This is the case since end port 112 would have closed before the hydraulic fluid in the third hydraulic actuator for the drive wheel has had time to flow out through line D4. The pressure difference between the first hydraulic actuator for the forks 41 (100 bar) and the third hydraulic actuator for the drive wheel 31 (200 bar) would result in a flow of hydraulic fluid from the third hydraulic actuator for the drive wheel to the first hydraulic actuator for forks and result in an unwanted movement of the forks.

However, the restriction 120 works as a resistance for the flow of hydraulic fluid from valve 110 through line D4. The flow resistance in restriction 120 causes end port 112 to be kept on the same pressure level as middle port 113. The pressure in the third hydraulic actuator 31 for the drive wheel decreases to the same pressure that is acting on the first actuator for the forks 41 at a controlled rate due to the restriction 120. Thereafter, the shuttle valve 110 shifts position and closes end port 112 and the drive wheel actuator 31 and the fork actuator 41 are in hydraulic communication.

It is obvious that the restriction 120 has to be dimensioned with regard to truck type, the weight range the truck is dimensioned for and loading conditions in order to assure that an acceptable drainage time for the third hydraulic actuator 31 is achieved when the support legs 51 are lowered.

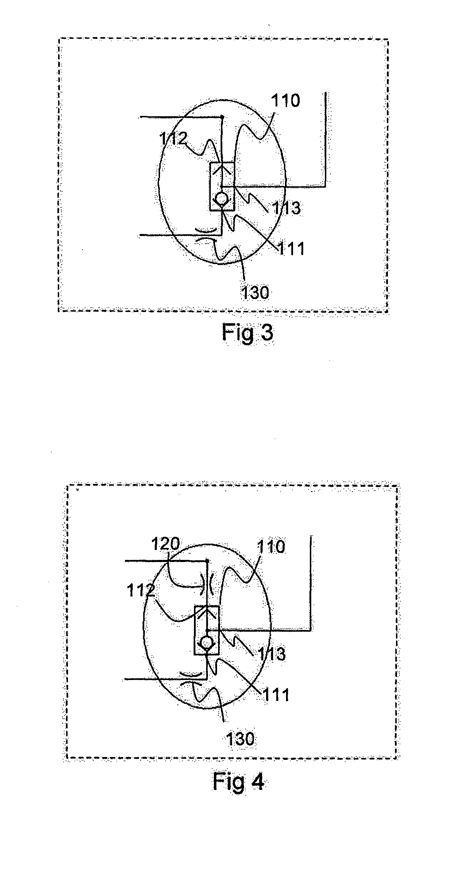

As described above, the hydraulic system comprises one restriction 120 that is arranged in line D4 in a position between the end port 112 of the valve 110 and the second hydraulic actuator 51. However, depending on the design of truck and of the hydraulic system the restriction could also be arranged in line D5 in a position between the end port 111 of valve 110 and the first hydraulic actuator 41 for the forks, see figure 3. Depending on the design of truck and of the hydraulic system it may also be preferred that the hydraulic system comprises two restrictions, see figure 4. A first restriction 120 is arranged in line D4 in a position between the end port 112 of the valve 110 and the second hydraulic actuator 51. A second restriction 130 is arranged in line D5 in a position between the end port 111 of valve 110 and the first hydraulic actuator for the forks 41.

The restrictions 130 and 120 in the two alternative hydraulic systems works in the same manner as described under the first embodiment.

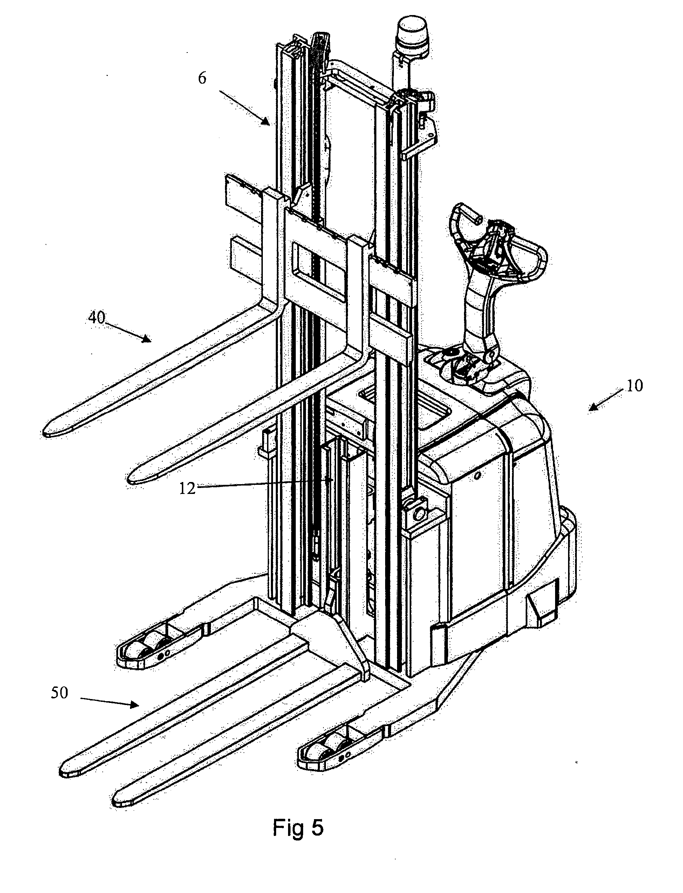

Figure 5 show a second embodiment of the truck according to the invention. In the second embodiment, same or similar features to the first embodiment have been assigned same reference numbers. According to the second embodiment, the forklift truck is a double stacker forklift truck 10 having first forks 40 and second forks 50. The first and second forks can be raised and lowered independently of each other on two separate masts 6, 12. The truck further comprises a drive wheel to which a hydraulic cylinder is connected for increasing the pressure of the drive wheel to ground in dependency of the load that the truck is carrying. The drive wheel and the hydraulic cylinder for increasing the pressure of the drive wheel to ground are not shown in figure 5.

EP2159186 describes a double stacker truck having first and second forks. This document is referred to for a detailed description of the truck according to the second embodiment.

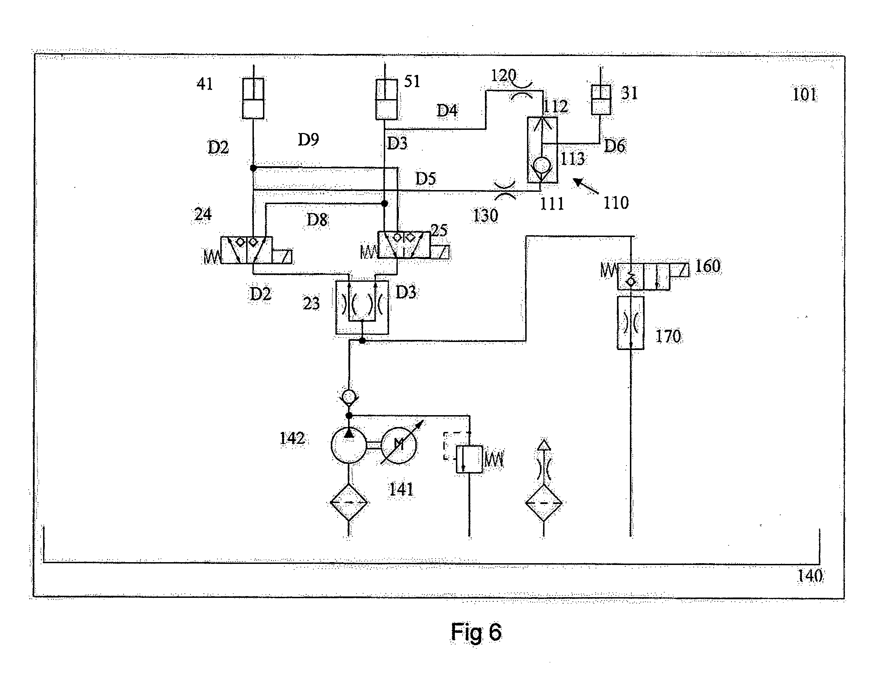

Figure 6 shows the hydraulic system 101 of the truck 10. The hydraulic system 10 comprises a first hydraulic cylinder 41 for raising or lowering the first forks 40 on the first mast 6 and a second hydraulic cylinder 51 for raising or lowering the second forks 50 on the second mast 12. It is obvious that the first and/or the second lifting cylinder could also consist of two or more hydraulic cylinders connected parallel as indicated in figure 3.

The hydraulic system 101 comprises a tank 140 which holds hydraulic fluid, typically oil. A pump 141 that is driven by an electric motor 142 supplies hydraulic fluid to the system. From the pump 141 a hydraulic fluid line D1 leads to the inlet of a flow divider 23 having two outlets. From a first outlet a line D2 leads over a directional valve 151 to the first hydraulic actuator 41 of the first forks 40 of the forklift truck. A further hydraulic fluid line D3 leads from the second outlet of the flow divider over a second directional valve 152 to the second hydraulic actuator 51 of the second forks 51 of the forklift truck.

From the first directional valve 24 a duct D8 leads to duct D3 in a position between the second hydraulic cylinder 51 and the second directional valve 25. From the second directional valve 25 a duct D9 leads to duct D2 in a position between the first hydraulic cylinder 51 and the first directional valve 24. Each directional control valve is arranged to open in two distinct directions, however only one direction may be open at a time. When valve 24 is open in the first direction, fluid is lead from valve 24 through duct D2 to hydraulic cylinder 41. When valve 24 is open in the second direction, fluid is lead through duct D8, to duct D3 and further to hydraulic cylinder 51'. When valve 25' is open in the first direction, fluid is lead through duct D3 to hydraulic cylinder 51. When valve 25 is open in the second direction, fluid is lead through duct D9, to duct D2 and further to hydraulic cylinder 41. The arrangement of two directional valves and the ducts D8 and D9 makes it possible to move the first and second forks either separately or simultaneous on the respective mast.

The hydraulic system 101 comprises a valve device 110 that connects the first hydraulic actuator 41' for the first forks and the second hydraulic actuator 51 for the second forks to the hydraulic actuator 31 of the drive wheel so that the highest hydraulic pressure that acts on either the first or the second hydraulic actuator'is supplied to the hydraulic actuator 31 of the drive wheel.

A duct D5 connects the first end port 111 of the valve device 110 to duct D2 which leads to the first hydraulic actuator 41. A duct D4 connects the first end port 112 of the valve device 110 to duct D3 which leads to the second hydraulic actuator 51. A duct D6 connects the middle port 113 of the valve device 110 to duct the hydraulic actuator 31 for the drive wheel of the truck.

According to the invention, a first flow restriction 120 is arranged in line D4 in a position between the end port 112 of the valve 110 and the second hydraulic actuator 51. A second restriction 130 is arranged in line D5 in a position between the end port 111 of valve 110 and the first hydraulic actuator 41 for the first forks.

The restrictions 120 and 130 works in the same way as the restriction 120 as described under the first embodiment. Hence restriction 120 prevents unwanted movement of the first forks when the second forks are actuated and restriction 130 prevents unwanted movement of the second forks when the first forks are actuated.

## Claims

1. A forklift truck (10) comprising a truck body (20), a drive wheel (30), first forks (40), second forks (50), or support arms (50), and a hydraulic system (100, 101) which comprises
- a first hydraulic line (D2) for delivering hydraulic fluid to an hydraulic actuator (41) of the first forks (40),
- a second hydraulic line (D3) for delivering hydraulic fluid to an hydraulic actuator (51) of the second forks (50) or to the support arms (50),
- a third hydraulic line (D6) for delivering hydraulic fluid to an hydraulic actuator (31) of the drive wheel (30), and
- a valve device (110) to which the first, second and third hydraulic lines (D2, D3, D6,) are connected, the valve device (110,) being adapted to supply the highest one of the hydraulic fluid pressures (PU, PL) of the first and the second hydraulic lines (D2, D3) to the third hydraulic line (D6), thereby assuring a load-dependent drive wheel pressure during operation of the forklift truck,
**characterized in that** the forklift truck hydraulic system comprises
- at least one flow restriction (130, 120) arranged to restrict hydraulic fluid flow between the hydraulic actuator of the first forks (40) or between the hydraulic actuator of the second forks (50), or of the support arms (50), and the valve device (110).

2. The forklift truck (10) of claim 1, wherein the valve device (110) is a pressure-actuated valve device (110).

3. The forklift truck (10) of claim 2, wherein the pressure-actuated valve device (110) is adapted to always supply the highest one of the hydraulic fluid pressures (PU, PL) of the first and the second hydraulic lines (D2, D3) to the third hydraulic line (D6).

4. The forklift truck (10) of claims 2 or 3, wherein the port of the pressure-actuated valve device (110) that is connected to the hydraulic actuator of the drive wheel (30) is directly connected to the hydraulic actuator of the drive wheel (30).

5. The forklift truck (10) of any one of claims 2 to 4, wherein the pressure-actuated valve device (110) is a shuttle valve (110).

6. The forklift truck (10) of claim 5, wherein a first end port (112) of the shuttle valve (110) is connected to the first hydraulic line (D2), a second end port (111) of the shuttle valve (110) is connected to the second hydraulic line (D3), and a middle port (113) of the shuttle valve (110) is connected to the hydraulic actuator of the drive wheel (30).

7. The forklift truck of any preceding claim, wherein the hydraulic actuator (31) of the drive wheel (30) is connected to a hydraulic fluid tank (140) of the forklift truck via the first hydraulic line (D2) and via the second hydraulic line (D3).

8. The forklift truck (10) of any preceding claim, wherein the flow restriction (130, 120) is a separate device which is not part of the valve device (110).

9. The forklift truck (10) of any preceding claim, wherein the flow restriction (130, 120) is a throttle valve (130, 120).

10. The forklift truck (10) of any one of claims 1-8, wherein the flow restriction (130, 120) is a part of the valve device (110).

11. The forklift truck (10) according to any preceding claim, wherein a flow restriction (120) is arranged in the hydraulic line (D4) between the first end port (112) of the valve device (110) and the second hydraulic actuator (51).

12. The forklift truck (10) according to any preceding claim, wherein a flow restriction (130) is arranged in the hydraulic line (D5) between the second end port (111) of the valve device (110) and the first hydraulic actuator (41).

13. The forklift truck (10) of any preceding claim, wherein said forklift truck (10) is a stacker forklift truck comprising upper forks (40) and elevating support arms (50), wherein
- a first flow restriction (120) is arranged to restrict the hydraulic fluid flow between the hydraulic actuator (51) of the elevating support legs (50) and the valve device (110) and,
a second flow restriction (130) is arranged to restrict the hydraulic fluid flow between the hydraulic actuator (41) of the upper forks (40) and the valve device (110).

14. The forklift truck (10) according to claim 13, wherein said forklift truck is a double stacker truck comprising upper forks (40) and elevating support arms (50) that are arranged to lift loads.

15. The forklift truck (10) of any of claims 1-12, wherein the fork lift truck (10) is a double stacker truck comprising first forks (40) and second forks (50), wherein the hydraulic system (101) of the double stacker truck (10) comprises:
- a first flow restriction (120) arranged to restrict the hydraulic fluid flow between the hydraulic actuator (41)of the first forks (40) and the valve device (110) and,
- a second flow restriction (130) arranged to restrict the hydraulic fluid flow between the hydraulic actuator (51)of the lower forks (50) and the valve device (110).

## Patentansprüche

1. Gabelstapler (10) mit einem Transporterkörper (20), einem Antriebsrad (30), ersten Gabeln (40), zweiten Gabeln (50) oder Trägerarmen (50), und einem Hydrauliksystem (100, 101), das aufweist:
eine erste Hydraulikleitung (D2) zum Zuführen eines Hydraulikfluids zu einem Hydraulikaktuator (41) der ersten Gabeln (40),
eine zweite Hydraulikleitung (D3) zum Zuführen eines Hydraulikfluids zu einem Hydraulikaktuator (51) der zweiten Gabeln (50) oder zu den Trägerarmen (50),
eine dritte Hydraulikleitung (D6) zum Zuführen eines Hydraulikfluids zu einem Hydraulikaktuator (31) des Antriebsrads (30), und
eine Ventilvorrichtung (110), mit der die erste, zweite und dritte Hydraulikleitung (D2, D3, D6) verbunden sind,
wobei die Ventilvorrichtung (10) den höchsten der Hydraulikfluiddrücke (PU, PL) der ersten und der zweiten Hydraulikleitung (D2, D3) zur dritten Hydraulikleitung (D6) zuführen kann, wodurch während eines Betriebs des Gabelstaplers ein lastabhängiger Antriebsraddruck sichergestellt wird,
**dadurch gekennzeichnet, dass** das Gabelstapler-Hydrauliksystem aufweist:
zumindest eine Strömungsbegrenzung (130, 120), die einen Hydraulikfluidstrom zwischen dem Hydraulikaktuator der ersten Gabeln (40) oder zwischen dem Hydraulikaktuator der zweiten Gabeln (50), oder der Trägerarme (50), und der Ventilvorrichtung (110) begrenzen kann.

2. Gabelstapler (10) gemäß Anspruch 1, bei dem die Ventilvorrichtung (110) eine druckbetätigte Ventilvorrichtung (110) ist.

3. Gabelstapler (10) gemäß Anspruch 2, bei dem die druckbetätigte Ventilvorrichtung (110) immer den höchsten der Hydraulikfluiddrücke (PU, PL) der ersten und der zweiten Hydraulikleitungen zur dritten Hydraulikleitung (D6) zuführen kann.

4. Gabelstapler (10) gemäß Anspruch 2 oder 3, bei dem die Mündung der mit dem Hydraulikaktuator des Antriebsrades (30) verbunden, druckbetätigten Ventilvorrichtung (110) direkt mit dem Hydraulikaktuator des Antriebsrades (30) verbunden ist.

5. Gabelstapler (10) gemäß einem der Ansprüche 2 bis 4, bei dem die druckbetätigte Ventilvorrichtung (110) ein Wechselventil (110) ist.

6. Gabelstapler (10) gemäß Anspruch 5, bei dem eine erste Endmündung (112) des Wechselventils (110) mit der ersten Hydraulikleitung (D2) verbunden ist, eine zweite Endmündung (111) des Wechselventils (110) mit der zweiten Hydraulikleitung (D3) verbunden ist, und eine Mittelmündung (113) des Wechselventils (110) mit dem Hydraulikaktuator des Antriebsrades (30) verbunden ist.

7. Gabelstapler gemäß einem der vorangegangenen Ansprüche, bei dem der Hydraulikaktuator (31) des Antriebsrades (30) über die erste Hydraulikleitung (D2) und über die zweite Hydraulikleitung (D3) mit einem Hydraulikfluidtank (140) des Gabelstaplers verbunden ist.

8. Gabelstapler (10) gemäß einem der vorangegangenen Ansprüche, bei dem die Strömungsbegrenzung (130, 120) eine separate Vorrichtung ist, die nicht Teil der Ventilvorrichtung (110).

9. Gabelstapler (10) gemäß einem der vorangegangenen Ansprüche, bei dem die Strömungsbegrenzung (130, 120) ein Drosselventil (130, 120) ist.

10. Gabelstapler (10) gemäß einem der Ansprüche 1-8, bei dem die Strömungsbegrenzung (130, 120) ein Teil der Ventilvorrichtung (110) ist.

11. Gabelstapler (10) gemäß einem der vorangegangenen Ansprüche, bei dem eine Strömungsbegrenzung (120) in der Hydraulikleitung (D4) zwischen der ersten Endmündung (112) der Ventilvorrichtung (110) und dem zweiten Hydraulikaktuator (51) angeordnet ist.

12. Gabelstapler (10) gemäß einem der vorangegangenen Ansprüche, bei dem eine Strömungsbegrenzung (130) in der Hydraulikleitung (D5) zwischen der zweiten Endmündung (111) der Ventilvorrichtung (110) und dem ersten Hydraulikaktuator (41) angeordnet ist.

13. Gabelstapler (10) gemäß einem der vorangegangenen Ansprüche, bei dem der Gabelstapler (10) ein Stapel-Gabelstapler mit oberen Gabeln (40) und hebenden Trägerarmen (50) ist, bei dem
eine erste Strömungsbegrenzung (120) den Hydraulikfluidstrom zwischen dem Hydraulikaktuator (51) der hebenden Trägerbeine (50) und der Ventilvorrichtung (110) begrenzen kann, und
eine zweite Strömungsbegrenzung (130) den Hydraulikfluidstrom zwischen dem Hydraulikaktuator (41) der oberen Gabeln (40) und der Ventilvorrichtung (110) begrenzen kann.

14. Gabelstapler (10) gemäß Anspruch 13, bei dem der Gabelstapler ein Doppelstapel-Transporter mit oberen Gabeln (40) und hebenden Trägerarmen (50) ist, die Lasten heben können.

15. Gabelstapler (10) gemäß einem der Ansprüche 1-12, bei dem der Gabelstapler (10) ein Doppelstapel-Transporter mit ersten Gabeln (40) und zweiten Gabeln (50) ist, bei dem das Hydrauliksystem (101) des Doppelstapel-Transporters (10) aufweist:
eine erste Strömungsbegrenzung (120), die den Hydraulikfluidstrom zwischen dem Hydraulikaktuator (41) der ersten Gabeln (40) und der Ventilvorrichtung (110) begrenzen kann, und
eine zweite Strömungsbegrenzung (130), die den Hydraulikfluidstrom zwischen dem Hydraulikaktuator (51) der unteren Gabeln (50) und der Ventilvorrichtung (110) begrenzen kann.

## Revendications

1. Chariot élévateur à fourche (10) comprenant une caisse de chariot (20), une roue motrice (30), une première fourche (40), une seconde fourche (50), ou des bras de support (50), et un système hydraulique (100, 101) qui comprend :
une première canalisation hydraulique (D2) destinée à fournir un fluide hydraulique à un actionneur hydraulique (41) de la première fourche (40) ;
une deuxième canalisation hydraulique (D3) destinée à fournir un fluide hydraulique à un actionneur hydraulique (51) de la deuxième fourche (50) ou aux bras de support (50) ;
une troisième canalisation hydraulique (D6) destinée à fournir un fluide hydraulique à un actionneur hydraulique (31) de la roue motrice (30) ; et
un dispositif de soupape (110) auquel sont connectées les première, deuxième et troisième canalisations hydrauliques (D2, D3, D6), le dispositif de soupape (110) étant adapté de façon à fournir la plus élevée des pressions de fluide hydraulique (PU, PL) des première et deuxième canalisations hydrauliques (D2, D3) à la troisième canalisation hydraulique (D6), en garantissant de ce fait une pression de roue motrice qui dépend de la charge au cours du fonctionnement du chariot élévateur à fourche ;
**caractérisé en ce que** le système hydraulique du chariot élévateur à fourche comprend :
au moins un dispositif de limitation d'écoulement (130, 120) agencé de façon à limiter l'écoulement du fluide hydraulique entre l'actionneur hydraulique de la première fourche (40) ou entre l'actionneur hydraulique de la seconde fourche (50), ou des bras de support (50), et le dispositif de soupape (110).

2. Chariot élévateur à fourche (10) selon la revendication 1, dans lequel le dispositif de soupape (110) est un dispositif de soupape actionné par une pression (110).

3. Chariot élévateur à fourche (10) selon la revendication 2, dans lequel le dispositif de soupape actionné par une pression (110) est adapté de façon à fournir en permanence la pression la plus élevée des pressions du fluide hydraulique (PU, PL) des première et deuxième canalisations hydrauliques (D2, D3), à la troisième canalisation hydraulique (D6).

4. Chariot élévateur à fourche (10) selon la revendication 2 ou la revendication 3, dans lequel l'orifice du dispositif de soupape actionné par une pression (110) qui est connecté à l'actionneur hydraulique de la roue motrice (30), est connecté directement à l'actionneur hydraulique de la roue motrice (30).

5. Chariot élévateur à fourche (10) selon l'une quelconque des revendications 2 à 4, dans lequel le dispositif de soupape actionné par une pression (110) est un sélecteur de circuit (110).

6. Chariot élévateur à fourche (10) selon la revendication 5, dans lequel un premier orifice d'extrémité (112) du sélecteur de circuit (110) est connecté à la première canalisation hydraulique (D2), un deuxième orifice d'extrémité (111) du sélecteur de circuit (110) est connecté à la deuxième canalisation hydraulique (D3), et un orifice médian (113) du sélecteur de circuit (110) est connecté à l'actionneur hydraulique de la roue motrice (30).

7. Chariot élévateur à fourche (10) selon l'une quelconque des revendications précédentes, dans lequel l'actionneur hydraulique (31) de la roue motrice (30) est connecté à un réservoir de fluide hydraulique (140) du chariot élévateur à fourche par l'intermédiaire de la première canalisation hydraulique (D2) et par l'intermédiaire de la deuxième canalisation hydraulique (D3).

8. Chariot élévateur à fourche (10) selon l'une quelconque des revendications précédentes, dans lequel le dispositif de limitation d'écoulement (130, 120) est un dispositif distinct qui ne fait pas partie du dispositif de soupape (110).

9. Chariot élévateur à fourche (10) selon l'une quelconque des revendications précédentes, dans lequel le dispositif de limitation d'écoulement (130, 120) est une soupape d'étranglement (130, 120).

10. Chariot élévateur à fourche (10) selon l'une quelconque des revendications 1 à 8, dans lequel le dispositif de limitation d'écoulement (130, 120) fait partie du dispositif de soupape (110).

11. Chariot élévateur à fourche (10) selon l'une quelconque des revendications précédentes, dans lequel un dispositif de limitation d'écoulement (120) est agencé dans la canalisation hydraulique (D4) entre le premier orifice d'extrémité (112) du dispositif de soupape (110) et le second actionneur hydraulique (51).

12. Chariot élévateur à fourche (10) selon l'une quelconque des revendications précédentes, dans lequel un dispositif de limitation d'écoulement (130) est agencé dans la canalisation hydraulique (D5) entre le deuxième orifice d'extrémité (111) du dispositif de soupape (110) et le premier actionneur hydraulique (41).

13. Chariot élévateur à fourche (10) selon l'une quelconque des revendications précédentes, dans lequel ledit chariot élévateur à fourche (10) est un chariot élévateur à fourche gerbeur qui comporte une fourche supérieure (40) et des bras de support élévateur (50), dans lequel :
- un premier dispositif de limitation d'écoulement (120) est agencé de façon à limiter l'écoulement du fluide hydraulique entre l'actionneur hydraulique (51) des jambes du support élévateur (50) et le dispositif de soupape (110) ; et
- un second dispositif de limitation d'écoulement (130) est agencé de façon à limiter l'écoulement du fluide hydraulique entre l'actionneur hydraulique (41) de la fourche supérieure (40) et le dispositif de soupape (110).

14. Chariot élévateur à fourche (10) selon la revendication 13, dans lequel ledit chariot élévateur à fourche est un chariot gerbeur double qui comprend une fourche supérieure (40) et des bras de support élévateur (50) qui sont agencés de façon à lever des charges.

15. Chariot élévateur à fourche (10) selon l'une quelconque des revendications 1 à 12, dans lequel le chariot élévateur à fourche (10) est un chariot gerbeur double qui comprend une première fourche (40) et une seconde fourche (50), dans lequel le système hydraulique (101) du chariot gerbeur double (10) comprend :
- un premier dispositif de limitation d'écoulement (120) agencé de façon à limiter l'écoulement du fluide hydraulique entre l'actionneur hydraulique (41) de la première fourche (40) et le dispositif de soupape (110) ; et
- un second dispositif de limitation d'écoulement (130) agencé de façon à limiter l'écoulement du fluide hydraulique entre l'actionneur hydraulique (51) de la fourche inférieure (50) et le dispositif de soupape (110).
